# EUROPEAN PATENT APPLICATION

(11) **EP 4 549 991 A1**
(43) Date of publication of application: **07.05.2025**
(21) Application number: 23275153.7
(22) Date of filing: 01.11.2023
(51) Int. Cl.: G01S 7/38, G01S 7/40

(54) **VIRTUAL TARGET GENERATOR**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

Disclosed is a virtual target generator for use with a RADAR system, comprising: at least one receive channel and at least two transmit channels, whereby the at least one receive channel is arranged to receive a transmitted signal from the RADAR system, process the signal and to re transmit it via a first of the at least two transmit channels to present a virtual target to the RADAR system.

## Description

### FIELD

The present invention relates to an improved Virtual Target Generator (VTG). A VTG is used to generate virtual, synthetic or non-real targets for and in conjunction with a RADAR. They are primarily used in the testing and design validation phase of RADAR development. Note that "target" in this context merely refers to an object illuminated by the RADAR, or a virtual object, generated by the VTG. It does not necessarily imply that it is a military target.

In use, the VTG is illuminated by a transmission from a RADAR and, in response, transmits a signal back to the RADAR, the signal having been processed in some way to "fool" the RADAR into believing that the Virtual Target responsible for the received signal is at a range more distant than the actual physical distance of the VTG from the RADAR.

### BACKGROUND

Virtual Target Generators are known in the art and are typically capable of creating a single virtual target, based on an illumination event, corresponding to a transmission from a RADAR.

In normal use, a transmitted signal is reflected from a real target and the echo or received signal is received back at the RADAR at a later time. In very simple terms, the distance from the RADAR to the real target is directly proportional to the time that elapses between the transmitted signal and receipt of the echo.

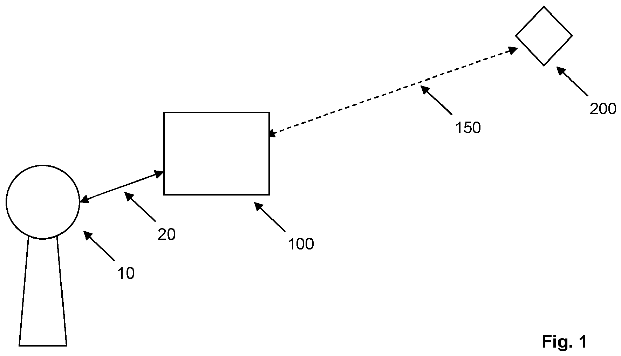

Figure 1 shows a known VTG 100. RADAR 10 is configured to produce a transmission. The RADAR 10 transmits a signal which is received by the VTG 100. The VTG processes the received signal and then retransmits it to the RADAR 10 at a certain time later. Note that the signal transmitted from the VTG is not a simple reflection; it is typically processed to delay it and reduce its amplitude, so as to mimic an echo from a more distant target. This, when decoded at the RADAR 10, appears to represent a target 200 which is located at an additional distance from the physical location of the VTG 100. In Figure 1, the line 20 represents the actual physical distance between the RADAR 10 and the VTG 100. The dotted line 150 represents the additional distance added by the VTG, such that the target 200 appears to be at a distance equal to the distances represented by lines 20 and 150.

Prior art VTGs are known to operate in this way, but they are limited in the manner in which they can represent targets and there is a need to be able to render virtual targets in different and improved ways. It is an aim of an embodiment of the present invention to address this and other shortcomings in the art, whether mentioned herein or not.

### SUMMARY

According to a first aspect of the present invention, there is provided a virtual target generator for use with a RADAR system, comprising:
at least one receive channel and at least two transmit channels, whereby the at least one receive channel is arranged to receive a transmitted signal from the RADAR system, process the signal and to re transmit it via a first of the at least two transmit channels to present a virtual target to the RADAR system.

In an embodiment, a second of the least two transmit channels is arranged to generate and transmit a signal configured to mimic a transmission from the virtual target.

In an embodiment, the mimicked transmission is a RADAR transmission.

In an embodiment, the first and second transmit channels are configured for different frequency bands.

In an embodiment, the different frequency bands are X band and S band.

In an embodiment, the VTG comprises n, where n>2, transmit channels whereby the virtual target generator is arranged to present n virtual targets to the RADAR system.

According to a second aspect of the present invention, there is provided a method of operating a Virtual Target Generator for use with a RADAR system, comprising the steps of:
receiving a transmission from the RADAR system via a receive channel;
processing the received signal so as to create a delayed and attenuated version of the received signal for transmission as a first transmit signal on a first transmit channel;
creating a second transmit signal on a second transmit channel; and transmitting the first and second transmit signals.

In an embodiment, the step of creating the second transmit signal on the second transmit channel comprises either creating a second virtual target or the creation of a spoof transmission from the first virtual target.

### BRIEF DESCRIPTION OF THE FIGURES

Embodiments of the invention will now be described by way of example only with reference to the figures, in which:
Figure 1 shows a Virtual Target Generator in use, as known in the art;
Figure 2 shows a Virtual Target Generator, according to an embodiment of the invention, in use;
Figure 3 shows a Virtual Target Generator, according to an embodiment of the invention, in use;
Figure 4 shows a Virtual Target Generator, according to an embodiment of the invention, in use;
Figure 5 shows a top level schematic representation of a Virtual Target Generator, according to an embodiment of the invention;
Figure 6 shows a physical configuration of a Virtual Target Generator according to an embodiment of the invention;
Figure 7 shows a 3-axis model; and
Figure 8 shows a flowchart of a mode of operation of a VTG according to an embodiment of the invention.

### DETAILED DESCRIPTION

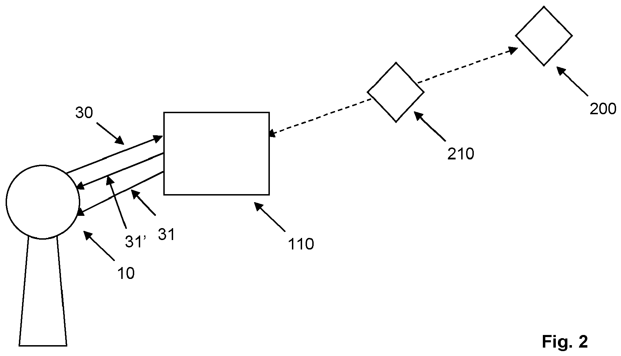

Figure 2 shows a VTG 110 according to an embodiment of the present invention. This differs from the prior art VTG 100 in that it is capable of generating an additional virtual target 210 located at a different distance than the first virtual target 200.

In order to achieve this, the VTG 110 according to an embodiment, is provided with a plurality of transmit channels and a single receive channel. The single receive channel receives a transmission 30 from the RADAR 10. This received signal is processed once, primarily to delay it and attenuate it, thereby creating the appearance of a target 210 at a first distance away from the RADAR. The processed signal is then transmitted 31 to the RADAR 10, on a first transmit channel, to represent and appear as a first virtual target 210.

The same received signal is then processed a second time to further delay and attenuate it and transmitted 31' to the RADAR 10 on a second transmit channel, such that it appears as a second virtual target 200 at a further distance from the RADAR 10.

It can be seen that a single receive channel is required in order to receive the common transmission from the RADAR 10, whereas two transmit channels are required in order to represent both virtual targets 200, 210. In principle, there is no limit to the number of transmit channels provided. Each transmit channel can be configured to generate a virtual target.

In the above, it is stated that the signal 30 received at the VTG 110 is processed primarily to delay and attenuate it before it is transmitted 31, 31' to the RADAR 10. In a further embodiment, the received signal may be further processed to introduce a Doppler effect, thereby providing further information on speed relative to the RADAR 10.

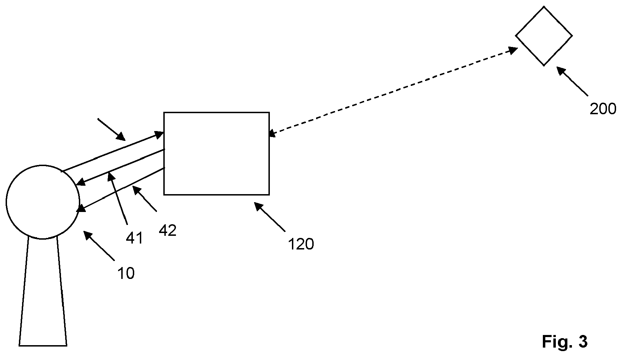

Figure 3 shows a VTG 120 according to an embodiment of the invention. In this embodiment, the VTG is operable to generate a virtual target 200, as already described. This is generated using one receive channel 40 to receive a signal from the RADAR 10 and to transmit back to the RADAR 10, on a first transmit channel 41, a delayed and attenuated signal to represent the location of the virtual target 200, as already described.

An additional, second, transmit channel 42 of the VTG 120 is used to transmit a signal to the RADAR to mimic a transmission from the virtual target 200. The mimicked transmission 42 may preferably mimic a transmission from a RADAR transponder which would be present on the virtual target 200, if it were an actual target. For instance, if the virtual target 200 represents an aircraft, the transmission from the VTG 120 on the second transmit channel 42 could represent an onboard RADAR. It could mimic another transmission from the aircraft or an Identify Friend or Foe (IFF) beacon. There is, conceptually, no restriction on what the transmission on the second channel may represent.

The transmission on the second channel 42 is generated entirely within the VTG 120 and its configuration, timing and amplitude is determined to tally correctly with the processed (i.e. delayed and attenuated) version of the signal transmitted from the VTG 120 on the transmit channel 41. In this way, the supplementary information comprises in the second channel 42 aligns properly with the information in the first channel 41.

As such, the data displayed on an associated display (not shown) of the RADAR 10 will be richer and more realistic and better represents an authentic target.

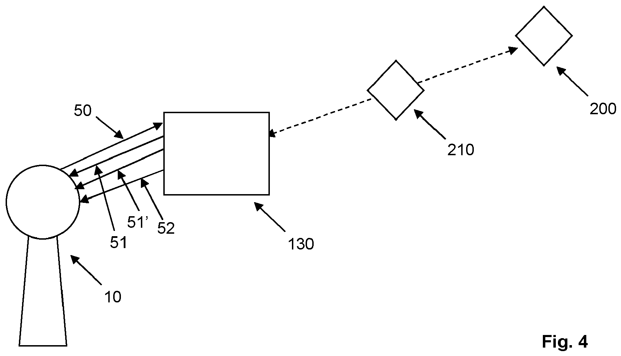

Figure 4 shows a further embodiment of the VTG 130. This embodiment is effectively a hybrid of the VTGs of Figure 2 and 3 and provides support for multiple virtual targets, as well as providing additional information from at least one of the targets, such as the mimicking a RADAR transponder on the virtual target.

In the example shown, the RADAR 10 transmits a signal 50 which is received on the VTG receive channel. This signal is processed to produce first and second delayed and attenuated signals 51, 51', which are transmitted back to the RADAR on first and second transmit channels. On a third transmit channel, a signal 52 is transmitted which is arrange to mimic a transmission from one of the virtual targets 200, 210, as described previously.

As can be seen from this embodiment, the VTG is scalable and can be arranged with as many transmit channels as required in order to virtually generate as many virtual targets as required. These virtual targets may be supplemented, as required, with further signals mimicking one or more transmissions, such as RADAR transmissions from the virtual targets.

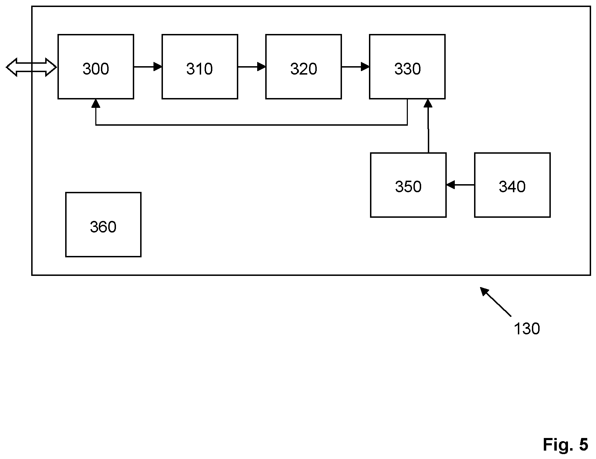

Figure 5 shows a top-level schematic of the operation of the VTG 130, showing the mode of operation.

An antenna 300 is provided to receive and transmit signals from/to the RADAR 10. The antenna function also includes RF processing for the receiver and transmitter. RX processor 310 decodes the signal received from the RADAR. VTG processor 320 processes the signal decoded by RX processor 310 to attenuate it, delay and, optionally, Doppler process it, to provide a signal for transmission back to the RADAR to represent the virtual target. TX Processor 330 transmits the signal back to the RADAR 10 via the antenna 300.

A second transmit channel is represented via secondary signal controller 340 and secondary signal generator 350. The controller 340 determines if a spoof RADAR signal, for instance, is to be created and associated with the virtual target. The generator 350 creates a suitable signal, which is then transmitted to the RADAR via antenna 300.

Note that the entre operation of VTG 130 is under the control of master processor 360.

The schematic in Figure 5 is intended to represent functionality and the physical configuration may be different. For instance, if the signals generated in the two transmit chains are in different frequency bands, then the conceptual antenna 300 may comprise distinct antennas for each band. Other corresponding changes will be required in the other modules.

In the event that further transmit chains are required, as shown in Figure 4, then additional modules may be introduced as required.

The VTG 130 is operable to receive and transmit in one or more RADAR frequencies, as required. Typical RADAR frequencies are located in the S band or X band. S band is usually defined to lie in the range 2.0 - 4.0 GHz, and X band is usually defined to lie in the range 7.0 - 12.0 GHz.

In a preferred embodiment, the processing of the received and transmitted signals is performed using Direct Digital (DD) technology. This means that the respective signals are sampled and processed at a very high speed and, at least for S Band, avoids the need for the usual down/up conversion to process the signal at an intermediate frequency (IF). In a preferred embodiment the DD processing occurs at approximately 3GHz. For X-band processing a single down-conversion (and complementary up-conversion) stage is required.

In all of the example arrangements shown so far, the VTG 110, 120, 130 (hereafter 130 for simplicity) is deployed in a fixed location. This is typically atop a pole or other support in the line of sight of the RADAR 10. However, the VTG may be affixed to a vehicle or other mobile platform, enabling a greater range of virtual target possibilities to be generated.

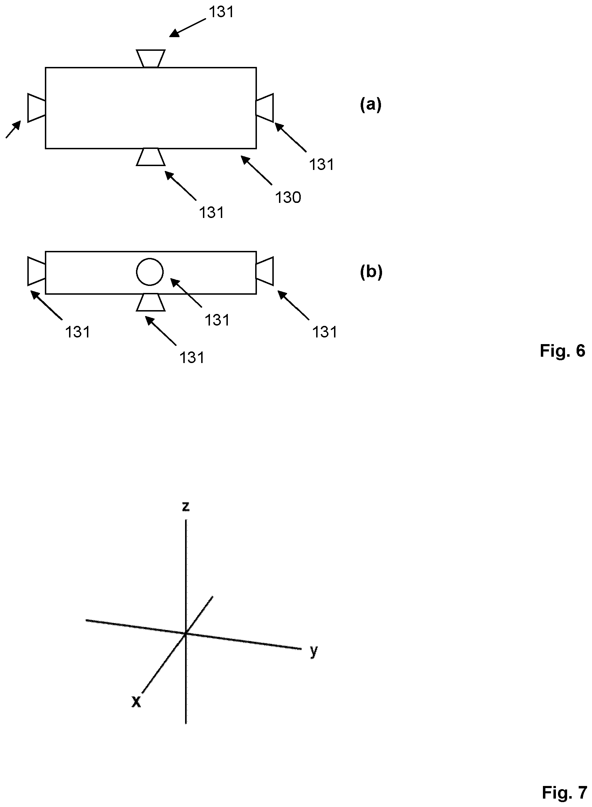

Figures 6a and 6b show, respectively, top and side views of a VTG 130. Figure 6a shows a top view and the surface that would be coupled to an underside of a drone or unmanned aerial vehicle (UAV). In that configuration, each of the forward, rear, left and right sides comprises an antenna 131. A further antenna is also provided on a lower surface of the VTG 130. In a 3-d system having three mutually orthogonal axes, there are 6 opposed directions represented by the x, y and z axes. The arrangement shown provides an antenna on the five available and exposed surfaces associated with those respective directions. The non-exposed surface is the one attached to the underside of the UAV.

Each of the antennas is operable as a receive and transmit antenna and is connected via suitable circuitry to each of the receive and transmit chains in the VTG 130. This allows the VTG 130 to be illuminated by a RADAR from a wide range of possible directions and allows the VTG to generate a virtual target therefrom, as described previously.

In the event that the VTG 130 is attached to a land or sea vehicle, then the surface shown in Fig 5a would be facing down in use and so the antennas 131 are oriented in forward, rear, left, right and up directions to provide the full range of coverage.

The VTG130 does not have to have the rectangular profile shown in Figure 6 and could be manufactured in a range of shapes and configurations. However, it is preferable that antennas are located such that coverage in as many possible directions is possible.

Figure 7 shows the familiar representation of mutually orthogonal x-y-z axes. Typically, securing the VTG 130 to a vehicle (e.g. UAV or boat) will block one of the directions, e.g. +z, leaving the other 5 directions available and accessible.

In this way, if the VTG 130 is constructed in, for instance, a substantially spherical shape, it is still possible to position antennas 130 around the surface of the spherical shape, with the antennas aligned with 5 of the possible 6 directions dictated by the x-y-z axes.

By securing the VTG 130 to a mobile platform of some sort, using the configuration shown, it is possible to maximise the possibility of receiving and successfully transmitting to the RADAR 10.

The mobile platform to which the VTG is attached should, ideally, have as small a RADAR profile as possible so that it does not, itself, present as a target on the RADAR scan. Alternatively, the RADAR 10 may be configured to effectively ignore the primary return from the VTG, if it is operable in a certain mode.

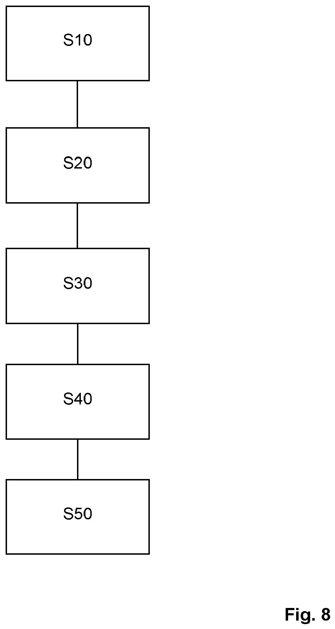

Figure 8 shows a flowchart, illustrating a mode of operation of a VTG 130. At step S10, a signal is received at the VTG from RADAR 10. At step S20, the received signal is processed to create a first signal for transmission to generate a first virtual target on a first transmit channel. At step S30 a second signal is created for transmission on a second transmit channel. At step S40, first and second transmissions occur via the first and second transmit channels. At step S50, the RADAR receives the first and second transmissions and displays the result accordingly.

Step S30 may involve the creation of a second virtual target or may involve the creation of a spoof or fake transmission from the first virtual target, as set out previously.

Embodiments of the present invention provide an improved rendering of virtual targets in a RADAR system and are configurable to provide multiple targets, supplemented with additional information if required.

## Claims

1. A virtual target generator for use with a RADAR system, comprising:
at least one receive channel and at least two transmit channels, whereby the at least one receive channel is arranged to receive a transmitted signal from the RADAR system, process the signal and to re transmit it via a first of the at least two transmit channels to present a virtual target to the RADAR system.

2. The virtual target generator of claim 1 wherein a second of the least two transmit channels is arranged to generate and transmit a signal configured to mimic a transmission from the virtual target.

3. The virtual target generator of claim 2 wherein the mimicked transmission is a RADAR transmission.

4. The virtual target generator of claim 2 or 3 wherein the first and second transmit channels are configured for different frequency bands.

5. The virtual target generator of claim 4 wherein the different frequency bands are X band and S band.

6. The virtual target generator of any preceding claim comprising n, where n>2, transmit channels whereby the virtual target generator is arranged to present n virtual targets to the RADAR system.

7. A method of operating a Virtual Target Generator for use with a RADAR system, comprising the steps of:
receiving a transmission from the RADAR system via a receive channel;
processing the received signal so as to create a delayed and attenuated version of the received signal for transmission as a first transmit signal on a first transmit channel;
creating a second transmit signal on a second transmit channel; and
transmitting the first and second transmit signals.

8. The method of claim 7 wherein the step of creating the second transmit signal on the second transmit channel comprises either creating a second virtual target or the creation of a spoof transmission from the first virtual target.
